# EUROPEAN PATENT SPECIFICATION

(11) **EP 4 185 120 B1**
(45) Date of publication and mention of the grant of the patent: **02.04.2025**
(21) Application number: 21737025.3
(22) Date of filing: 24.06.2021
(51) Int. Cl.: A23F 5/04, A23N 12/08, A47J 31/42

(54) **APPARATUS FOR ROASTING AND DISCHARGING COFFEE BEANS**
VORRICHTUNG ZUM RÖSTEN UND AUSGEBEN VON KAFFEEBOHNEN
APPAREIL DE TORRÉFACTION ET DE DÉCHARGE DE GRAINS DE CAFÉ

(30) Priority: 24.07.2020 EP 20187611
(43) Date of publication of application: 31.05.2023
(73) Proprietor: Société des Produits Nestlé S.A., 1800 Vevey (CH)
(72) Inventor: SAVIOZ, Grégory, 1966 Saxonne (CH)
(74) Representative: Pasquino, Fabio
(86) International application number: PCT/EP2021/067310
(87) International publication number: WO 2022/017718

(56) References cited:
- WO-A1-2014/207616
- WO-A1-90/06694
- US-A- 3 964 175
- US-A- 4 895 308
- US-A- 5 322 005
- US-A1- 2019 208 798

## Description

### 1. Field of the invention

The present invention relates to an apparatus for roasting coffee beans and a system comprising such an apparatus.

### 2. Technical background

Roasting coffee beans transforms unroasted coffee beans into roasted coffee beans. The unroasted coffee beans are typically green and/or dried coffee beans, and the roasted coffee beans particularly contribute to the flavor of the coffee beverage, which is prepared from the (grinded) roasted coffee beans. Roasting the coffee beans can be on a large scale, but also on a small scale. In small scale roasting of coffee beans, the business to the customer (a shop, a coffee shop, etc.) or a customer, e.g. the consumer of the coffee beverage, roasts the coffee beans. Roasting coffee beans by the consumer is very interesting, since the consumer can roast the coffee beans at home in order to experiment with different flavor profiles and in order to ensure a particularly fresh roast of the coffee beans, for example as a hobby.

When roasting of the coffee beans is finished, the roasted coffee beans need to be supplied for further processing such as grinding and/or coffee beverage preparation (e.g., coffee extraction). Removing of the roasted coffee beans is typically done manually. This, however, is disadvantageous, since the user, who manually manipulates the roasted coffee beans, might get hurt due to touching hot parts of the machine and/or the (hot) roasted coffee beans. Further, manually handling the roasted coffee beans is not so efficient, since the user needs to remove the coffee beans from the coffee roaster (machine) and manually insert the roasted coffee beans in a further apparatus, e.g. a coffee grinder and/or coffee beverage machine, for further processing.

Removing of the roasted coffee beans from the apparatus may also be done automatically. However, since the roasted coffee beans have respectively a relatively high weight (e.g. when compared to ground coffee in the form of powder), a certain amount of energy is required in order to drive the coffee beans and thus remove the coffee beans from the chamber. Further, the automation of removing the roasted coffee beans is quite difficult, in particular for the reason that the current of air for roasting and/or cooling the coffee beans agitates the coffee beans inside of the apparatus.

Document US4895308A describes a fully automatic coffee maker wherein a control circuit drives a blower and a heater so that hot air flow generated is discharged into a roasting container from air supply holes of a head portion to roast the raw coffee beans. After the hot air has been supplied for a predetermined time period to the roasting portion and the roasting of the coffee has been completed, the heater is turned off. When the coffee beans have cooled down the control circuit supplies a signal to the opening and closing mechanism so as to open the pathway of the transferring portion between the roasting container and the grinding portion thus the roasted coffee beans are loaded into the grinding portion by gravitational force.

Document WO9006694A1 describes a roaster for coffee beans wherein a roasting air stream transports the beans from entrance in an air stream path defined by a conduit to an altitude from where they are directed to return to entrance by falling into a hopper having side wall and again in the same conduit. A valve can modify the conduit to define a path toward an exit port.

Therefore, it is an object of the present invention to provide an apparatus, which overcome the aforementioned drawbacks. That is, it is in particular an object of the present invention to provide an apparatus, which provides for the consumer a more efficient and convenient roasting of coffee beans, in particular when the roasted coffee beans need to be further processed.

These and other objects, which become apparent upon reading the following description, are solved by the subject matter of the independent claims. The dependent claims refer to preferred embodiments of the invention.

### 3. Summary of the invention

According to the invention, an apparatus for roasting coffee beans is provided. The invention is defined in the appended claims. The apparatus comprises: a chamber in which coffee beans can be received for roasting, a device for generating a current of air in order to agitate the coffee beans received by the chamber, a heater for heating air so that the so heated air is blown by the device into the chamber in order to generate the heated current of air, and a control unit for switching the apparatus between a roasting mode and a discharging mode, wherein the control unit is functionally connected to the device for generating a current of air and/or to the heater. The chamber is delimited by a bottom, a top, and a sidewall extending from the bottom to the top, wherein the sidewall comprises a discharge (or ejection) port, which is selectively movable between a closed position and an open position, such that the current of air generated by the device can drive the coffee beans through the discharge port to be discharged (i.e. ejected) from the chamber, when the discharge port is in the open position.

Wherein in the roasting mode the discharge port is in the closed position and the device is adapted to generate a heated current of air to roast the coffee beans received by the chamber, and wherein in the discharging mode the discharge port is in the open position and the apparatus is arranged to use the current of air generated by the device to drive the coffee beans through the discharge port to be discharged from the chamber, wherein the discharge port is arranged to be closer to the bottom than to the top, and wherein the bottom comprises an air inlet, and wherein the device is arranged to blow air through said inlet in order generate the current of air inside of the chamber. The apparatus therefore in particular facilitates that only the discharge port needs to be operated in order to discharge (or eject) roasted coffee beans from the chamber (and thus out of the apparatus); the discharge port therefore functions as a "trapdoor". In other words, it may thus not be required to change the current of air, generated by the device, in order to discharge roasted coffee beans from the chamber. In particular, the device therefore does not need to be operated to raise the velocity and/or pressure of the current of air (e.g. of a current of air for roasting and/or cooling) in order to discharge the roasted coffee beans from the chamber. Further, since the discharge port is not arranged on the top, but (at least in part) in the sidewall, less potential energy is used in order to transport the roasted coffee beans in the vertical direction and to the discharge port in order to be discharged from the chamber. The sidewall, on which the discharge port is arranged, further effects that the coffee beans, which are driven by the current of air, can travel along the sidewall and to the discharge port in order to be then discharged from the chamber, when the discharge port is in the open position.

The current of air generated by the device transports heat to be transferred to the coffee beans in order to roast the coffee beans, i.e. effect the chemical reactions to roast the (roasted) coffee beans. The apparatus is thus very easily controllable in order to selectively provide the heated current of air to roast the coffee beans. In particular, the heater may be arranged downstream with respect to the current of air generated by the device.

The apparatus comprises a control unit for switching the apparatus between a roasting mode and a discharging mode, wherein in the roasting mode the discharge port is in the closed position, and wherein in the discharging mode the discharge port is in the open position. The control unit thus facilitates that the apparatus can, for example, automatically switch between the roasting mode and the discharging mode, e.g. after a certain period of time has lapsed for roasting the coffee beans. Roasting coffee beans and discharging the coffee beans is therefore simplified.

In the roasting mode, the apparatus is arranged to roast the coffee beans received by the chamber by the device generating a heated current of air inside of the chamber.

In the discharging mode, the apparatus is arranged to use the current of air generated by the device to drive the coffee beans through the discharge port to be discharged from the chamber. For example, the same current of air, which is used in the roasting mode, can be used in the discharging mode for driving the coffee beans through the discharge port to be discharged from the chamber.

In sum, the apparatus therefore can be in particular operated with less (electrical) power or energy for discharging roasted coffee beans. Thus, the device, which generates the current of air inside the chamber (e.g. a fan), can be downsized, and thus there is in particular no need to oversize the device or a motor of the device. Thus, also the overall size of the apparatus can be optimized, thereby making the apparatus (or machine) compact. Further, the apparatus provides a convenient solution for the user to easily discharge the roasted coffee beans for further processing, in particular without the need of directly touching the roasted coffee beans and/or without colliding or conflicting with an optionally provided temperature sensor. Therefore, also the risk of contacting hot parts of the apparatus by the user's hand is reduced.

The discharge port is arranged closer to the bottom than to the top. Therefore, particularly less energy is required to discharge the coffee beans from the chamber, since the coffee beans do not require much potential energy in order to travel in the vertical direction for being discharged from the chamber.

The discharge port may be manually movable between the closed position and the open position. Thus, the user can move the discharge port between the closed position and the open position only with muscle power, e.g. from the hand of the user. Further, moving of the discharge port between the closed position and the open position does therefore not need to rely on electrical components (e.g. a driving unit) and/or the availability of electrical power. Therefore, the discharge port also facilitates a simplified maintenance of the apparatus.

Additionally or alternatively, the apparatus may comprise a driving unit (e.g. an (electrical) motor), which is arranged to move the discharge port between the closed position and the open position. Thus, the user does not need to use their muscle strength in order to move the discharge port between the closed position and the open position. The discharge port can therefore be very easily moved between the closed position and the open position. Besides that, the driving unit facilitates that the movement of the discharge port between the closed position and the open position can be automated.

The discharge port may be slidably movable in order to move the discharge port between the closed position and the open position. This makes the apparatus particularly compact, since the discharge port can thus be arranged such that by sliding the discharge port, the discharge port does not protrude from the sidewall.

Additionally or alternatively, the discharge port may be pivotably movable in order to move the discharge port between the closed position and the open position. Thus, the discharge port may be movable about a rotational movement axis, which movement axis may extent in a vertical or horizontal direction. The discharge port can therefore be easily moved between the closed position and the open position.

The sidewall may be movable, e.g. pivotably movable, in order to move the discharge port between the closed position and the open position. For example, a part of the discharge port, e.g. a covering element, is stationary, wherein the sidewall comprises an opening so that by moving the sidewall the opening moves with respect to the covering element. The covering element may then, in the closed position, completely cover this opening, wherein in the open position, the sidewall is moved so that this opening is at least partially uncovered so that coffee beans can be driven through the opening to be discharged from the chamber. Since the sidewall is typically larger than the discharge port, in particular with respect to a contacting surface for moving the respective part, moving of the discharge port between the closed position and the open position, e.g. manually or by the driving unit (see above), is simplified. Of course, in other examples, the part of the discharge port, e.g. the covering element, is moving, wherein the sidewall is stationary. Further, also both the part of the discharge port (e.g. the covering element) and the sidewall (e.g. the opening) may move in order to move relative to each other for moving the discharge port between the open position and the closed position.

Additionally, the device may be adapted to generate a current of air to cool the coffee beans received by the chamber. For example, the device transports (ambient fresh) air, which is not heated, into the chamber in order to generate the current of air for cooling the coffee beans; the current of air then comes into contact with the (already roasted) coffee beans, and thus heat is transferred from the coffee beans to the current of air so that the coffee beans are cooled. For example, for generating the current of air to cool the coffee beans, the heater may simply be deactivated or turned off.

At least a cross-section of the sidewall, which comprises the discharge port, may have at least in part a circular or elliptical shape. This shape of the cross-section is very advantageous for driving the coffee beans along the sidewall and subsequently to the discharge port in order to discharge the coffee beans from the chamber. The coffee beans, which are then discharged through the discharge port, may then move tangentially with respect to the shape of the cross-section. For example, the part of the cross section, which has a circular or elliptical shape, merges continuously with the discharge port, in particular with an opening of the discharge port. Preferably, the before-mentioned cross-section has a closed circular or elliptical shape.

The bottom comprises an air inlet, wherein the device is arranged to blow air through said inlet in order to generate the current of air inside of the chamber. Therefore, the device can be very efficiently arranged in the apparatus.

The discharge port is arranged at a distance from the bottom or at the bottom above the air inlet.

The top of the chamber may comprise an outlet that is selectively movable between a closed position and an open position, wherein in the open position the outlet allows air and/or coffee chaff to be discharged from the chamber. In other words, the outlet may function as a ventilation for the chamber. By moving this outlet into the closed position, the part of the current of air for driving the coffee beans through the discharge port can be very easily intensified, without intensifying the (total) current of air generated by the device. That is, the part of the current of air for discharging the air and/or chaff from the chamber can be very easily redirected for discharging the coffee beans through the discharge port.

The apparatus may further comprise a chaffs collector, wherein the chaffs collector is arranged to collect chaffs of the coffee beans, e.g. via the outlet, wherein the apparatus is preferably adapted to use the current of air to drive the chaffs into the chaffs collector. Since it is desired that the roasted coffee beans are discharged from the chamber without any chaffs, the chaffs collector provides an easy means to separate the chaffs from the roasted coffee beans and to collect the chaffs. The chaffs collector may then be removed or detached from the apparatus, and the chaffs may then the removed from the chaffs collector and, for example, thrown into a bin or used for otherwise processing of the chaffs.

The apparatus may be a home appliance apparatus. The apparatus may thus have a design for being used in a kitchen of a household, e.g. arranged next to a coffee grinder and/or a beverage preparation machine. In other words, the apparatus may be an in-home solution for coffee roasting.

According to a second aspect of the invention, a system is provided, which comprises an apparatus according to any one of claims 1 to 7 and a further apparatus. The further apparatus is functionally connected to the apparatus to process the coffee beans, which are discharged from the apparatus through the discharge port.

The system therefore facilitates that a user of the system does not need to manually, in particular with his own hands, handle the coffee beans from the apparatus to be used in the further apparatus. Therefore, the user of the system can very easily roast the coffee beans and further process the so roasted coffee beans. For example, the system may be a home appliance apparatus and/or be provided as a (single) unit.

The further apparatus may comprise (or be) a grinder for grinding the (roasted) coffee beans. The grinder therefore transforms the roasted coffee beans into ground coffee (e.g. in the form of powder), which may then be used for preparing a coffee beverage by coffee extraction. Additionally or alternatively, the further apparatus may comprise (or be) a beverage preparation machine for preparing a beverage from the coffee beans, e.g. by coffee extraction. For example, if the grinder is present, the beverage preparation machine can be functionally connected to the grinder in order to prepare a coffee beverage from the ground coffee. The grinder and the beverage preparation machine may be provided as a unit and/or may be integrally formed.

### 4. Description of preferred embodiments

In the following, the invention is described exemplarily with reference to the enclosed figures, in which
- Figure 1: shows schematic perspective view of an apparatus according to a preferred embodiment of the invention;
- Figures 2-9: show different schematic perspective views of the apparatus according to the preferred embodiment shown in figure 1, wherein parts of the apparatus are omitted for schematically illustrating the chamber and the discharge port, wherein the discharge port is in different positions;
- Figures 10 and 11: show different schematic perspective views, which schematically show the top of the apparatus according to the preferred embodiment shown in figure 1 in an enlarged view;
- Figure 12: shows a schematic perspective view of the apparatus according to the preferred embodiment shown in figure 1, wherein the apparatus further comprises a chaffs collector;
- Figure 13: shows a schematic perspective view of an apparatus according to a further preferred embodiment of the invention;
- Figure 14: shows a schematic perspective view of a system according to a preferred embodiment of the invention;
- Figure 15: shows a schematic perspective cross-sectional view (along a horizontal section plane) of the system according to the preferred embodiment shown in figure 14, in particular for schematically illustrating the functional connection between the apparatus and the further apparatus;
- Figure 16: is a schematic perspective cross-sectional view (along a vertical section plane) of the system according to the preferred embodiment shown in figure 14; and
- Figure 17: is a schematic perspective view of an exemplary mechanism for the apparatus according to the preferred embodiments.

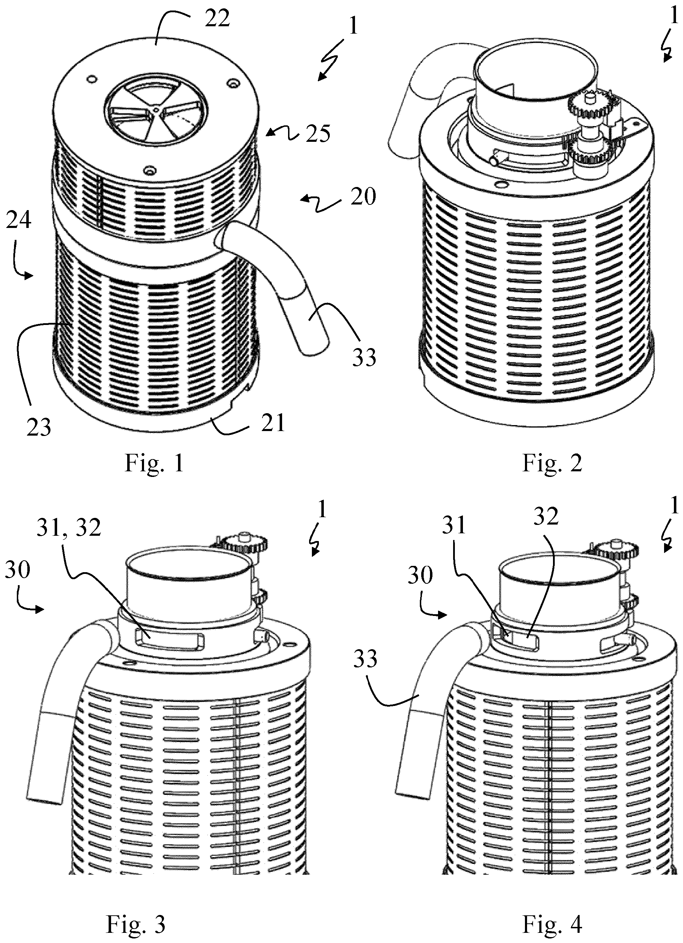

In figures 1-13, a preferred embodiment of an apparatus 1 is exemplarily shown. The apparatus 1 is adapted for roasting coffee beans. More specifically, the apparatus 1 is adapted to transform unroasted coffee beans, for example in the form of green coffee beans and/or dried coffee beans, into roasted coffee beans. More specifically, the roasting of the coffee beans transforms the chemical and physical properties of the unroasted coffee beans in order to produce the characteristic flavor of the roasted coffee beans and, thus, of the coffee beverage, which is prepared from the so roasted coffee beans. That is, the roasting of the coffee beans effect the specific taste of roasted coffee beans, for example by a Maillard reaction and other chemical reactions. The process of roasting the coffee beans therefore precedes other processes required for preparing the coffee beverage, such as coffee grinding and/or coffee brewing.

The apparatus 1, which exemplarily shown in the figures, is adapted for small scale coffee roasting, and is thus in particular not a large scale (industrial) roasting apparatus or machine. The apparatus 1 is thus particularly suitable for being used on the side of the business to customer (e.g. a coffee shop) and/or of the consumer, which is typically the consumer of the coffee beverage. Therefore, the apparatus 1 is preferably a home appliance apparatus. As such, the apparatus 1 may be used in a household or kitchen, in particular on a tabletop, e.g. next to or (functionally) integrated with a coffee grinder and/or a beverage preparation machine. The apparatus 1 therefore preferably has a size and weight for being transportable by a single person, in particular without the need of a dedicated transport mechanism.

The apparatus 1 comprises a chamber 10, in which coffee beans can be received for roasting. For example, the chamber 10 is delimited by a bottom 11, a top 12, and a sidewall 13 extending from the bottom 11 to the top 12. Therefore, when the coffee beans are received by the chamber 10, the coffee beans are preferably supported on the bottom 11 and are at least in part in contact with the sidewall 13. The chamber 10 has a design so that in particular heat and/or heated air can come in contact with the (unroasted) coffee beans in order to roast the coffee beans; for example, the bottom 11 and/or the sidewall 13 is made of a material with a relatively high heat conductivity, e.g. a material comprising or consisting of metal. The bottom 11 and/or the sidewall 13 may comprise a plurality of holes, which facilitate that heat and/or a current of air (for heating and/or for cooling) can flow into the chamber 10 for accordingly processing the coffee beans.

The top 12 is preferably defined by the distal end of the sidewall 13 and/or may be arranged opposite to the bottom 11. For example, the top 12 may extent in a plane. The top 12 may comprise or be an opening for accessing the chamber 10. As such, via the top 12, coffee beans may be removed from the chamber 10 and/or inserted into the chamber 10, i.e. the chamber 10 may be filled with coffee beans by way of the top 12. The chamber 10 may be filled, additionally or alternatively, with coffee beans, for example, by way of an opening arranged in the sidewall 13 and/or in the bottom 11. For example, the apparatus 1 may be adapted to be functionally connected with a hopper, which contains unroasted coffee beans, i.e. green and/or dried coffee beans. The unroasted coffee beans may then move from the hopper, e.g. said opening, into the chamber 10 for being received in the chamber 10 for roasting. For example, the hopper may be arranged such that the unroasted coffee beans move from the hopper into the chamber 10 only by gravity.

The chamber 10 may be detachably attached to the apparatus 1, e.g. by way of a form and/or a frictional fit. For example, the apparatus 1 comprises a receptacle, which comprises the chamber 10 such that the chamber 10 is detachably attached to the apparatus 1. For example, the receptacle may comprise a handle for manually handling the receptacle and thus the chamber 10, e.g. in order to detach the chamber 10 from the apparatus 1 and/or to attach the chamber 10 to the apparatus 1.

As apparent from, in particular, figure 1, the apparatus 1 may comprise a housing 20 for housing at least the chamber 10. For example, the housing 20 has a base 21 and a top 22, wherein the chamber 10 is arranged such that the top 12 (of the chamber 10) is arranged at or is the top 22 of the housing 20. As such, the top 12 is preferably flush with the top 22, which is preferably defined by a distal end of the housing 20. The housing 20 may also comprise a sidewall 23, which extends from the bottom 21 to the top 22 and preferably circumferentially surrounds the chamber 10. The housing 20 is not limited to a specific form. The housing 20 may have a non-symmetrical or symmetrical form. For example, the housing 20 has substantially the form of a cylinder or a (truncated) cone.

As apparent from figure 1, the housing 20 may be segmented, i.e. provided in several parts. For example, the housing 20 comprises a lower part 24 and an upper part 25. The upper part 25 is preferably detachably attached to the lower part 24, e.g. by a form and/or frictional fit. The upper part 25 preferably houses at least a part of the chamber 10 and/or comprises the top 22. For example, the upper part 25 and the chamber 10 are concentrically arranged. The lower part 24 may house at least a part of the chamber 10 and/or may comprise the bottom 21 of the housing 20. The lower part 24 may contain the components for roasting coffee bean in the chamber, e.g. the (air generating) device and/or heater (see below); that is, the lower part 24 may be the roaster. The lower part 24 and the upper part 25 may have an identical cross-section. As such, the lower part 24 and the upper part 25 may form, for example, a geometrical (symmetrical) form such as a cylinder, when the parts 24, 25 are assembled together. The housing 20, in particular the sidewall 23, may comprise a plurality of ventilation holes, for example evenly distributed over the sidewall 23. The ventilation holes aid in cooling the components, which are housed by the housing 20. Thus, the ventilation holes particularly aid in transferring heat away from the chamber 10 so that the chamber 10 is cooled. Preferably, the lower part 24 forms the bottom or support of the apparatus 1. Thus, the lower part 24 may be designed such that the apparatus 1 can be placed on a surface (a tabletop, etc.) and/or arranged with respect or on a beverage preparation machine. Preferably, the bottom 21 is adapted to be placed on a surface such as a tabletop, and/or may be configured to be mounted (e.g. fastened, such as with a form and/or frictional fit) to or on a further apparatus such as a grinder and/or a beverage preparation machine.

The apparatus 1 further comprises a device (not shown) for generating a current of air inside of the chamber 10 in order to agitate the coffee beans received by the chamber 10. In particular, the device may be a fan, and/or the device may be adapted to use fluid bed technology to generate the current of air inside of the chamber 10. For example, the coffee beans are agitated by the current of air such that the coffee beans move towards and then along the sidewall 10 and, optionally, towards the top 12 of the chamber. Agitating the coffee beans in the chamber 10 may be advantageous, in particular in order to improve the roasting and/or cooling of the coffee beans. The device may be adapted to generate a heated current of air for roasting the coffee beans, which are received by the chamber 10. For example, the apparatus 1 or the (current of air generating) device may further comprise a heater, which heats up (fresh) air, wherein the device transports or blows this heated up air into the chamber 10. The current of (hot) air therefore comes into contact with the coffee beans and thus effects the chemical and/or physical reactions to roast the coffee beans. Additionally, the device may be adapted to generate a current of air to cool the (already roasted) coffee beans received by the chamber 10. For example, for cooling the coffee beans, the current of air generated by the device is not heated up (e.g. by simply controlling the heater to be deactivated or turned off), so that, for example, only (fresh) air, e.g. ambient air, is blown into the chamber 10.

The device is not limited to be arranged in a specific position as long as the device can generate the current of air in the chamber 10. For example, the bottom 11 may comprise an air inlet, e.g. in the form of a (single) hole or a plurality of holes. The device is arranged such that the current of air generated by the device flows from the device through the air inlet and into the chamber 10 to thereby generate the current of air inside of the chamber 10. Thus, the bottom 11 may be arranged between the chamber 10 on the one side and the device and, optionally, the heater on the other side. The air inlet is preferably not arranged on the same level as the distal end of the sidewall 10, i.e. the air inlet may be provided in a part of the bottom 11, which is offset in a direction away from the chamber 10, such as provided in a recess of the bottom 11. If the discharge port 30 is provided at the bottom 11, i.e. when there is substantially no distance between the discharge port 30 and the bottom 11, the discharge port 30 is provided at a distance to the air inlet. In other words, the discharge port 30 may be arranged above the (hot) air inlet. Preferably, the housing 20, for example the lower (housing) part 24, houses the device and/or the heater. In other examples useful for understanding the invention, also the upper (housing) part 25 may house the device and/or the heater.

According to the invention, the sidewall 13 comprises a discharge port 30. As can be seen in figures 2-9, the discharge port 30 is selectively movable between a closed position (see, for example, figures 2 and 3) and an open position (see, for example, figures 4-6, and 8). For example, the discharge port 30 comprises an opening 31 and a covering element 32 such that the covering element 32 selectively (completely) covers or (at least in part) uncovers the opening 31. Therefore, when the covering element 32 (completely) covers the opening 31, the discharge port 30 is preferably in the closed position, whereas when the covering element 32 (at least in part) does not cover the opening 31, the discharge port 30 is preferably in the open position. The opening 31 may be arranged on or formed in the sidewall 13, i.e. as an opening extending through the sidewall 13. The covering element 32 may be arranged on the sidewall 13 or may be also arranged separately with respect to the sidewall 13. As apparent from figures 2-9, the covering element 32 may be arranged in the chamber 10, e.g. on the surface of the sidewall 13 being directed to the inside of the chamber 10. In other examples, the covering element 32 may be also arranged outside of the chamber 10, e.g. on the surface of the sidewall 13 facing away from the chamber 10.

In the closed position, the coffee beans, which are agitated by the current of air, cannot escape the chamber 10 via the discharge port 30. For example, the moving or agitating coffee beans cannot be driven through the discharge port 30, since the covering element 32 covers the opening 31. As such, the coffee beans may come into contact with the covering element 32, however cannot escape the chamber 10 via the opening 31. In the closed position, the current of air generated by the device can therefore roast and/or cool the coffee beans received by the chamber 10.

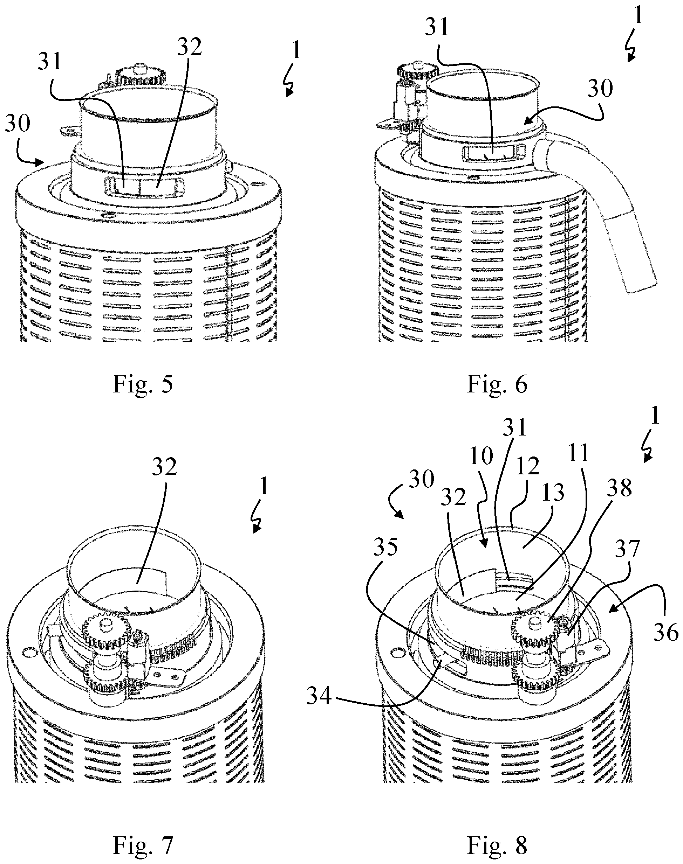

In the open position of the discharge port 30, the coffee beans received by the chamber 10 are driven, by the current of air generated by the device, through the discharge port 30 to be thus discharged from the chamber 10, in particular in a direction away from the apparatus 1. When the discharge port 30 is in the open position, the discharge port 30 is adapted such that one or more coffee beans can be discharged through the discharge port 30 at the same time. As can be seen, for example, in figure 4, the covering element 32 at least in part covers the opening 31 for discharging coffee beans from the chamber 10. The opening 31 and the covering element 32 may therefore define an opening, which may be smaller than the opening 31, such that one or more coffee beans can be discharged through said opening at the same time; this opening therefore has at least the size of a single coffee bean. Preferably, in the open position, the covering element 32 does not cover the opening 31 at all so that the whole extent of the opening 31 can be used for discharging coffee beans from the chamber 10. As apparent from, for example, figure 5, the covering element 32 may only partially cover the opening 31 in the open position such that the opening 31 is only half opened.

The coffee beans, which are discharged from the chamber 10 via the discharge port 30, are therefore moving in a direction away from the chamber 10, in particular away from the sidewall 13. The so discharged coffee beans can now be used for a further processing, such as in a dedicated jug and/or for grinding and/or coffee beverage preparation, e.g. coffee extraction. For example, the coffee beans being discharged from the chamber 10 are directed to a conduit or pipe 33, which is arranged to guide the coffee beans for further processing. The conduit 33 may guide the coffee beans to a different position than the chamber 10, e.g. to an outside of the apparatus 1, preferably for being processed in a further apparatus such as a grinder for grinding the coffee beans and/or a beverage preparation machine for preparing a beverage from the coffee beans or from ground coffee made from the coffee beans. The conduit 33 may be arranged at a distance to the discharge port 30 or may be directly coupled to the discharge port 30, for example directly coupled to the opening 31. The conduit 33 may extend through the housing 20, e.g. through the upper housing part 25. For example, the conduit 33 may extend from an inside of the housing 20, in which the chamber 10 is provided, to an outside of the housing 20. The conduit 33 may have any design or form, which is suitable for guiding the discharged coffee beans, such as the design or form of a nozzle, slide, channel, pipe, tube, or hose.

The coffee beans may be discharged from the chamber 10 with a direction, which intersects or does not intersect the sidewall 13. Preferably, the coffee beans are discharged from the chamber 10 via the discharge port 30 with a direction, which is substantially tangential with respect to the sidewall 13 and/or the extent of the discharge port 30, e.g. of the opening 31. The direction of discharging the coffee beans through the discharge port 30 and therefore out of the chamber 10 may be effected by the direction of the current of air generated by the (air generating) device and/or by the sidewall 13. Preferably, the sidewall 13 is accordingly designed to facilitate an advantageous discharging of coffee beans through the discharge port 30. For example, at least a cross-section of the sidewall 13 (i.e. the surface of sidewall 13 being directed to the inside of the chamber 10, also referred to as "inner surface"), which comprises the discharge port 30, has at least in part a circular or elliptical shape. Preferably, the whole cross section is in the form of a closed circle or ellipsis. With the cross-section, which is at least in part circularly or elliptically shaped, the coffee beans, which are in contact with the sidewall 13, can smoothly travel along the sidewall 13 to be subsequently discharged through the discharge port 30. As such, the coffee beans can be in particular discharged through the discharge port 30 with a direction, which is tangential to the circular or elliptical shape. Preferably, the sidewall 13, at least the inner surface of the sidewall 13, has identical cross-sections along the (symmetrical) axis of the chamber 10.

The discharge port 30 is arranged to be closer to the bottom 11 than to the top 12 of the chamber 10, as can be seen, for example, in figure 8. The discharge port 30 is arranged at a distance to the bottom 11 or at the bottom 11 above the air inlet. If the discharge port 30 comprises the opening 31, a lower side edge of the opening 31 may therefore be defined by the bottom 11. By arranging the discharge port 30 close to the bottom 11 the device does not need to provide much energy to generate a current of air, which can drive the respective coffee beans along a long vertical direction in order to discharge the coffee beans from the chamber 10; in other words, it is not required to use much potential energy in order to discharge the coffee beans from the chamber 10. If the discharge port 30 is arranged to be distanced from the bottom 11 at a distance, this may be measured from the bottom 11 to a lower side edge of the discharge port 30, over which side edge the coffee beans travel in order to be discharged from the chamber 10; for example, the lower side edge may be a lower side edge of the opening 31. The distance may be in the range up to 5% or 10% or 20% or 30% or 40% or 50% or 60% or 70% of the height of the chamber 10 to 5% or 10% or 20% or 30% or 40% or 50% or 60% or 70% or 80% of the height of the chamber 10, wherein the height of the chamber 10 is (measured) from the bottom 11 to the top 12 of the chamber 10.

The opening 31 may have an elongate form, such as the form of a slit. In general, the opening 31 is, however, not limited to a specific form, as long as one or more coffee beans can be discharged through the opening 31 at the same time. For example, the opening 31 may also have a round, an elliptical, a polygonal, a square, and/or a rectangular form. The opening 31 may in particular extend along the circumference of the sidewall 13. Thus, the opening 31 may extent along a round direction. The covering element 32 may have at least the size of the opening 31, so that in particular the covering element 32 can appropriately cover the opening 31. For example, the form of the covering element 32 corresponds to the form of the opening 31 so that the covering element 32 may, for example, have a round shape. The covering element 32 may also have an elongate form. The covering element 32 may be made from an (elongate) piece of material, e.g. having a rectangular form. The piece of material may be a sheet, e.g. a sheet of metal. The piece of material may be formed or bent in order to correspond to the opening 31. For example, the covering element 32 may be a flap, an aperture, or a door, and/or may have a thin structure.

The discharge port 30 may be slidably movable in order to move the discharge port 30 between the closed position and the open position. The discharge port 30 may be arranged such that operating or moving the discharge port 30 with a sliding movement, e.g. defined by a sliding element having only one degree of freedom, namely the sliding movement, moves the discharge port between the closed position and the open position. For example, the covering element 32 is arranged on the sidewall 13 such that the covering element 32 can slide with respect to the sidewall 13 to thus selectively cover or not cover the opening 31. Additionally or alternatively, the discharge port 30 may be pivotably movable in order to move the discharge port 30 between the closed position and the open position. For example, the opening 31 and/or the covering element 32 may be arranged so as to be pivotably (i.e. rotatably) movable around a specific movement axis. Preferably, the movement axis extends in a vertical direction or in a horizontal direction. The movement axis may be, for example, the symmetrical axis of the chamber 10.

The opening 31, i.e. the sidewall 13 comprising the opening 31, and the covering element 32 may be relatively movable to each other in order to move the discharge port 30 between the closed position and the open position. For example, one of the opening 31 (i.e. the sidewall 13) and the covering element 32 remains stationary (with respect to the apparatus 1), wherein the respective other one of the opening 31 and covering element 32 is moving. In another example, both the opening 31 and the covering element 32 move in order to move relatively to each other. Thereby, in particular the sidewall 13 may be movable, e.g. pivotably movable, in order to move the discharge port 30 between a closed position in the open position. As such, the sidewall 13 may be movably supported, e.g. rotatably supported. The sidewall 12 may be moveably supported on the housing 20, e.g. on the lower housing part 24.

The discharge port 30 may be manually movable between the closed position and the open position. That is, the discharge port 30 is preferably adapted such that the discharge port 30 can be moved between the closed position and the open position with muscle strength (of a hand) of a user of the apparatus 1 only. For example, the discharge port 30 comprises a manipulating element for manually moving the discharge port 30 between the closed position and the open position. The manipulating element may be, for example, a protrusion 34. The protrusion 34 may be arranged on the covering element 32, e.g. integrally formed with the same. For example, the covering element 32 is arranged such that the manipulating element, e.g. in the form of the protrusion 34, extents through the opening 31 or a further opening 35 (extending through the sidewall 12) to an outside with respect to the chamber 10. The manipulating element respectively protrusion 34 can therefore be also be used as a stopper in order to limit a relative movement between the opening 31 and the covering element 32.

Additionally or alternatively, the apparatus 1 may comprise a driving unit 36 (e.g. a motor drive) for moving the discharge port 30 between the closed position and the open position. The driving unit 36 may comprise a (electrical) motor 37 and/or a transmission 38, wherein the transmission 38 is adapted to transfer power of the motor 37 to the discharge port 30 in order to move the discharge port 30 between the closed position and the open position. For example, the driving unit 36 moves the covering element 32 in order to cover or not cover the opening 31 in order to accordingly move the discharge port 30 between the closed position and the open position. In the exemplarily shown preferred embodiment of the apparatus 1, as can be seen, for example, in figure 8, the driving unit 36 is adapted to transmit power to the sidewall 13 (e.g. to the outer surface of the sidewall 13), to thereby move the sidewall 13 in order to move the discharge port 30 between the open position and the closed position. For example, the driving unit 36 meshes, e.g. with the transmission 38, with the sidewall 13 so that a (rotational) movement of the driving unit 36 drives the sidewall 13 to make a (rotational) movement to thereby move the discharge port 30 between the closed position and the open position. The transmission 38 of the driving unit 36 may comprise one or more gears, which on one side mesh with teeth arranged on the sidewall 13, and which on another side mesh with the motor 38 of the driving unit 36.

The driving unit 36 is not limited to be arranged in a specific position. Preferably, the driving unit 36 is arranged in the housing 20, e.g. in the lower part 24 and/or the upper part 25. The driving unit 36 is preferably not arranged in the chamber 10. For example, the driving unit 36 is arranged between the sidewall 13 and a sidewall of the housing 20, e.g. the sidewall 23.

The apparatus 1 comprises a control unit (not shown), in order to accordingly control the roasting and discharging of the coffee beans, e.g. according to a control program, which includes, in particular, a predefined roasting and/or temperature profile. The control unit is adapted for switching the apparatus 1 between a roasting mode and a discharging mode. In the roasting mode, the discharge port 30 is in the closed position and the apparatus 1 is arranged to roast the coffee beans received by the chamber 10, e.g. by accordingly controlling the (current of air generating) device to generate a heated current of air inside of the chamber 10. For example, the control unit controls or activates both the device and the heater in order to provide the heated current of air inside of the chamber 10. Therefore, the control unit is functionally connected to the device and/or heater.

The control unit may be configured such that the apparatus 1 remains in the roasting mode based on a predefined roasting program (or profile), which may be stored in the control unit. The predefined roasting program may include, for example, process parameters for roasting the coffee beans received by the chamber 10. The process parameters may include a temperature, a velocity and/or a pressure of the (heated) current of air, and/or a specific (total) time for the roasting and/or cooling of the coffee beans. For example, the control unit may be configured such that after the specific time has lapsed, the control unit automatically switches the apparatus 1 into the discharging mode. When the control unit switches the apparatus 1 into the discharging mode, the control unit may only control the discharge port 32 to move in the open position. The control unit may thus be functionally connected to the discharge port 30, in particular to its driving unit 36, in order to accordingly control the discharge port 30 to move between the closed position and the open position. The control unit may be also operated by a user, e.g. by the user interface described below, for (manually) switching between the roasting mode and the discharging mode.

In the discharging mode, the apparatus 1 is thus arranged to use the current of air generated by the device to drive the coffee beans through the discharge port 30 to be discharged from the chamber 10. The control unit may be configured such that in the discharging mode the heater is controlled to be switched off or deactivated. The control unit may be configured such that the apparatus 1 remains in the discharging mode until the control unit receives a signal for leaving the discharging mode, e.g. for switching into the roasting mode. For example, the signal may be a user input signal, e.g. received from the user interface. The control unit may be also adapted to switch the apparatus 1 into different modes, such as a cooling mode, in which the discharge port 30 is in the closed position and the heater is controlled to be deactivated. The control unit may be arranged in the housing 20, for example in the lower part 24 and/or the upper part 25.

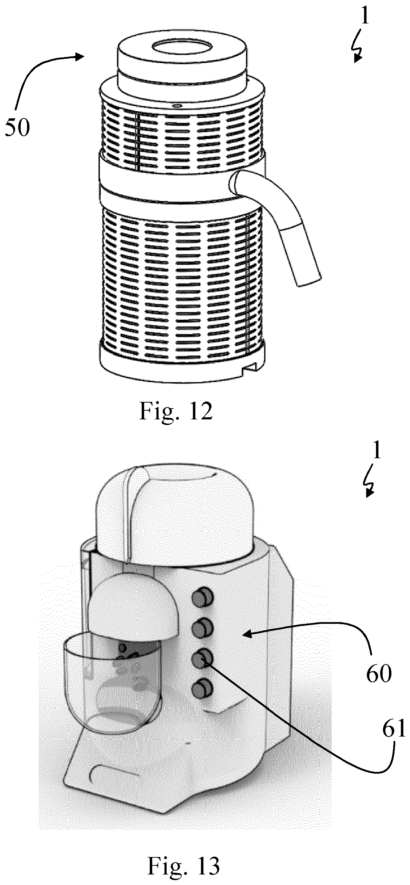

As exemplarily shown in figure 13, the apparatus 1 may comprise a user interface 60. The user interface 60 facilitates that the user of the apparatus 1 can accordingly control the apparatus 1, in particular for roasting and/or discharging the coffee beans, i.e. in particular for moving the discharge port 30 between the closed position and the open position. The user interface 60 is preferably functionally connected to the control unit so that the control unit can receive user inputs or signals from the user interface 60, e.g. for switching between the roasting mode and the discharging mode. The user interface 60 may comprise one or more (e.g. only four) control elements 61, e.g. in the form of one or more buttons or other touch sensitive elements (touchscreen, etc.), for controlling the apparatus 1. For example, the one or more control elements 61 comprise a control element for starting the roasting process, i.e. for switching into the roasting mode, and a control element for stopping the roasting process, e.g. for switching into the cooling mode and/or the discharging mode. The control elements 61 may also comprise a control element for powering up (and turning off) the apparatus 1 (e.g. an on/off control element). The user interface is preferably arranged on a user side of the apparatus 1. The user side of the apparatus 1 is preferably the front side of the apparatus 1 and/or the side of the apparatus 1, on which the coffee beans are discharged from the chamber 10.

The apparatus 1 may further comprise a power inlet, e.g. in the form of a power plug. By way of the power inlet, the parts of the apparatus 1 requiring energy, such as electrical energy (voltage and/or current), can be supplied with energy. These parts are, in particular, the device, the heater, the driving unit 36, the control unit, and/or the user interface 60. The power plug may be provided on a rear side of the apparatus 1 and/or on the housing 20, e.g. on the lower part 24 or the upper part 25. The rear side of the apparatus 1 may be a side of the apparatus 1 that is opposite to the user side.

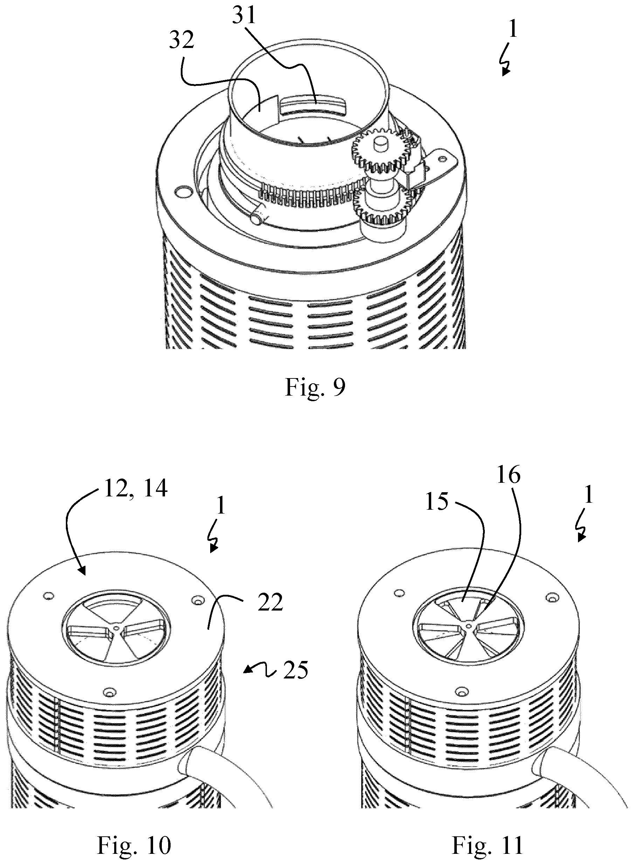

As can be seen, in particular, in figures 10 and 11, the top 12 may comprise an outlet 14 that is selectively movable between a closed position and an open position. In the open position, the outlet 14 allows (hot or cool) air and/or coffee chaff (also referred to as "chaffs") to be discharged from the chamber 10. The unroasted coffee beans typically have a (green and/or dried) skin, in particular when it is first picked off the coffee tree. The chaff may also be referred to as husk of the coffee bean. During roasting of the coffee beans, this skin comes off the coffee beans and thus remains as chaffs. That is, in particular the high temperature of roasting allows the chaffs to be easily removed from the coffee beans, without the need of additional work. Since it is desired that this chaffs of the so roasted coffee beans does not remain with the roasted coffee beans, because, for example, the consumer does not wish to have the chaffs inside of the grinder and/or beverage preparation machine and, thus, inside of the coffee beverage, the chaffs are preferably discharged from the chamber 10 and collected, for example outside of the apparatus 1. Thus, the chaffs will not remain with the finished product, which is the roasted coffee beans.

That is, the current of air, which is generated by the device, drives the air and/or chaffs to the top 12 to be subsequently discharged through the outlet 14 and thus discharged from the chamber 10. The outlet 14 may be a diaphragm. The outlet 14 may comprise a movable element 15 and one or more openings 16, wherein the movable element 15 and the one or more openings 16 are movable relatively to each other in order to move the outlet 14 between the closed position and the open position. For example, the element 15 is moving with respect to the (stationary) opening 16. The element 15 may be arranged to be rotationally movable with respect to the opening 16. In the closed position, the element 15 then preferably (completely) covers the opening 16, wherein in the open position, the element 15 at least in part does not cover the opening 16, thereby allowing the air and/or chaffs to be discharged from the chamber 10. In the closed position, there is substantially no current or at least a reduced amount of air flowing through the outlet 14. Thus, the whole or at least an increased part of the current of air generated by the device can be used, for example, for driving the coffee beans to be discharged from the chamber 10. Preferably, the one or more openings 16 are arranged or formed in the top 22 of the housing 20. The element 15 may be movably mounted to the housing 20 or upper housing part 25, e.g. to the top 22.

The outlet 14 is preferably functionally connected to the control unit so that the control unit can (automatically) operate the outlet 14 to move between the closed position and the open position. For example, the control unit may be configured such that (only) in the roasting mode the outlet 14 is moved into the open position. Additionally or alternatively, the control unit may be configured such that (only) in the discharging mode the outlet 14 is in the closed position. Additionally or alternatively, the outlet 14 may be adapted to be manipulated manually in order to move between the outlet's closed and open position.

As can be seen in figure 12, the apparatus 1 may further comprise a chaffs collector 50 for collecting the chaffs of the coffee beans, which are roasted by the chamber 10. The chaffs collector 50 is preferably arranged such that the chaffs flow from the chamber 10 through the outlet 14 to the chaffs collector 50 to be collected by the chaffs collector 50. The chaffs collector 50 may comprise a compartment, in which the chaffs are collected and prevented from returning to the chamber 10. For example, the chaffs collector 50 may comprise an inlet, which allows only a unidirectional flow of the chaffs so that the chaffs are collected by the chaffs collector 50; thus, the inlet may allow a flow of the chaffs 50 into the compartment, but prevent a flow of the chaffs out of the compartment, in particular towards the chamber 10. In order to provide a particularly good collection of the chaffs by the chaffs collector 50, the chaffs collector 50 and the device can be accordingly arranged to one another. For example, the device can be arranged such that the current of air, which is generated by the device, drives the chaffs of the coffee beans towards the chaffs collector 50, such that the chaffs are collected by the chaffs collector 50.

The chaffs collector 50 may be designed to selectively open the chaffs collector 50 or, if present, the compartment in order to throw away or otherwise use the collected chaffs. The chaffs collector 50 may be detachably arranged, so that the chaffs collector 50 can be detached from the apparatus 1, e.g. in order to easily throw away the chaffs. For example, the chaffs collector 50 is detachably mounted to the housing 20 (for example on the top 22 of the housing 20), e.g. by a form and/or frictional fit or accordingly designed fastening element. The chaffs collector 50 may thus form the top of the apparatus 1.

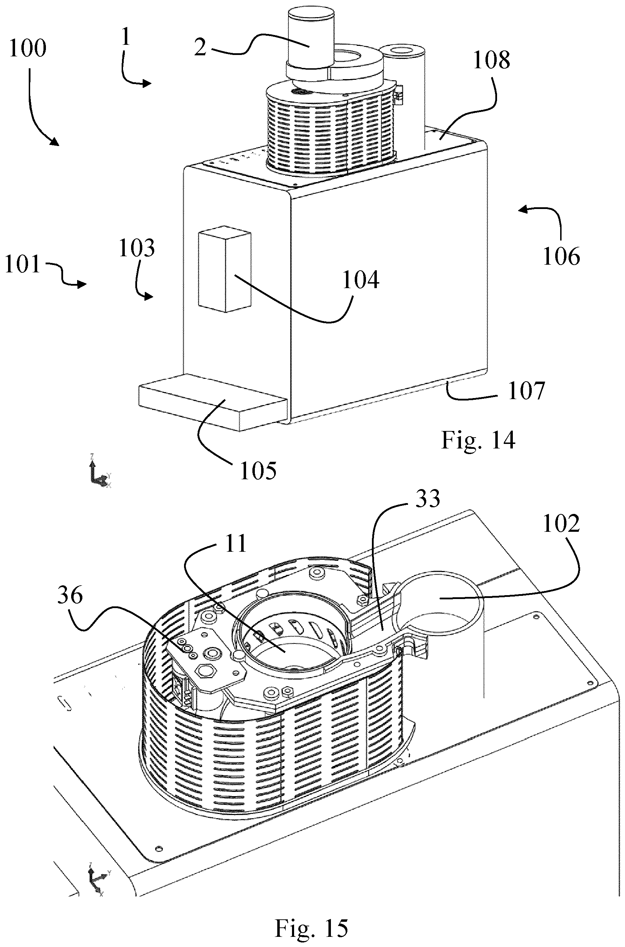

In figures 14-16, a system 100 according to a preferred embodiment of the invention is exemplarily shown. The system 100 comprises an apparatus 1 according to any of claims 1 to 7 and a further apparatus, which in this preferred embodiment is a beverage preparation machine 101, e.g. an (full) automatic beverage preparation machine. The apparatus 1 is functionally connected to the beverage preparation machine 101 such that the beverage preparation machine 101 can process the coffee beans, which are discharged from the apparatus 1 through the discharge port 30. That is, the beverage preparation machine 101 prepares a beverage from the discharged coffee beans. In other examples, the further apparatus may also be a different apparatus for processing the discharge coffee beans, e.g. a grinder for grinding the coffee beans.

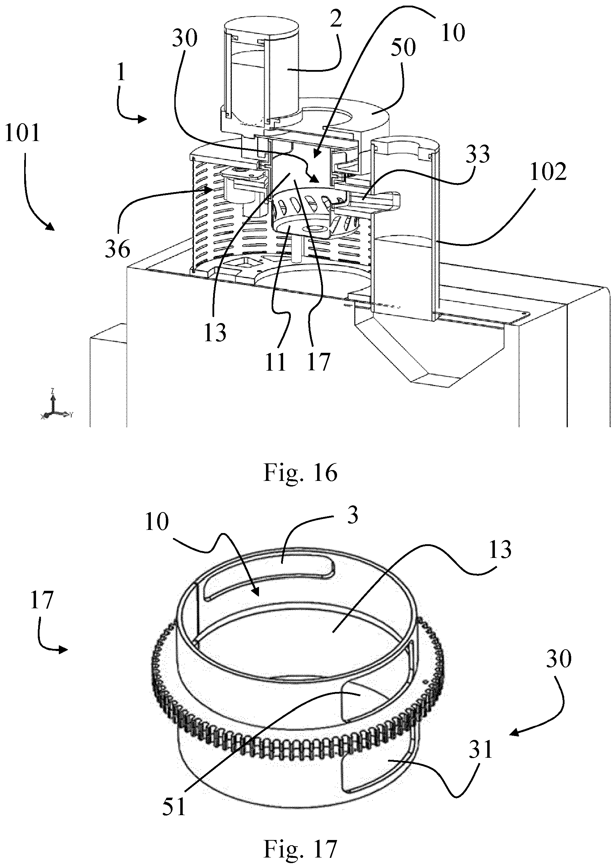

The apparatus 1 is functionally connected to the beverage preparation machine 101 such that the coffee beans discharged from the chamber 10 can move to the beverage preparation machine 101 with the current of air generated by the (current of air generating) device of the apparatus 1. Therefore, the coffee beans can directly move from the apparatus 1 through the beverage preparation machine 101, in particular without any additional manipulation of the coffee beans. For example, the apparatus 1 comprises the conduit 33 so that the coffee beans are at least moving along the conduit 33 to be moved from the apparatus 1 into the beverage preparation machine 101 for further processing of the (roasted) coffee beans. As apparent from, in particular, figure 16, the conduit 33 may be connected to a hopper 102 (e.g. designed in the form of a chimney) so that the roasted coffee beans traveling through the conduit 33 are discharged from the conduit 33 to be filled into the hopper 102. The hopper 102 may be integrally provided with the beverage preparation machine 101, and/or the hopper 102 may be detachably provided with respect to or on the beverage preparation machine 101. The hopper 102 and/or the connection between the conduit 33 and the hopper 102 is/are preferably sealed so that substantially no air can enter the hopper 102 and come into contact with the roasted coffee beans filled into the hopper 122. Thus, roasted coffee beans filled into the hopper 102 can maintain a fresh roast over a relatively long time.

The beverage preparation machine 101 preferably comprises a grinder for grinding the coffee beans discharged from the apparatus 1. For example, the coffee grinder is arranged such that the hopper 102 feeds the coffee grinder, e.g. by moving the coffee beans from the hopper 102 into the grinder by gravity. The grinder therefore grinds the coffee beans to ground coffee, from which the beverage preparation machine 101 can then prepare a coffee beverage. For example, the beverage preparation machine 101 further comprises one or more beverage preparation modules, such as a water tank, a water pump, and/or a heater, for preparing a coffee beverage from the roasted coffee beans, i.e. from the ground coffee. As apparent from figure 14, the beverage preparation machine 101 may comprise a beverage dispensing side 103 for the dispensing of the coffee beverage. The dispensing side 103 comprises, for example, an outlet 104 for dispensing the coffee beverage and/or a support or tray 105, on which a coffee cup can be placed so that the coffee cup is filled with the coffee beverage dispensed from the machine 101, e.g. from the outlet 104.

The beverage preparation machine 101 comprises a housing 106. In the housing 106, at least a part of the beverage preparation modules can be arranged. The housing 106 has a bottom 107 and a top 108. The bottom 107 is preferably adapted such that the beverage preparation machine 101 and, thus, the system 100 can be placed on a surface in a household or kitchen, such as a tabletop. The apparatus 1 is preferably arranged on the top 108 of the housing 106. The apparatus 1 can therefore be very efficiently arranged with respect to the beverage preparation machine 101.

As apparent from figures 14 and 16, the apparatus 1 may comprise the hopper 2 (e.g. a coffee (beans) inlet chamber and/or in the form of a cylinder), which is adapted to (sealingly) store unroasted coffee beans. The hopper 2 is connected to the chamber 10 so that the coffee beans stored in the hopper 2 can move into the chamber 10 (for subsequent roasting), e.g. only by gravity. For example, the coffee beans stored in the hopper 2 can move into the chamber 10 by way of a port (also referred to as "insertion port 3"), which is selectively movable between a closed position and an open position. Therefore, in the open position, unroasted coffee beans can move from the hopper 2 into the chamber 10 via this port, whereas in the closed position, no unroasted coffee beans can move from the hopper 2 into the chamber 10. This port may be functionally connected to the control unit so that the control unit can control this port to be in the closed position or open position. For example, the control unit controls this port to be opened, before switching into the roasting mode. Additionally or alternatively, the port may be also manually movable, i.e. with muscle strength, in order to be moved into the closed or into the open position. The hopper 2 is, however, not required. For example, the unroasted coffee beans may be also directly, i.e. manually, filled into the chamber 10.

As can be seen in figure 17, the apparatus 1 may comprise a mechanism 17 for moving at least the discharge port 30 between the closed position and the open position is shown. The mechanism 17 comprises the sidewall 13 and thus preferably in part delimits the chamber 10. The bottom 11 is preferably not an integral part of the mechanism 17, thus the bottom 11 is preferably separately provided with respect to the mechanism 17. The mechanism 17 is preferably moveable (e.g., rotatably) arranged such that also the sidewall 13 is moveably arranged. Thereby, the discharge port 30 can be moved between the closed position and the open position by moving the mechanism 17 and, thus, the sidewall 13. In figure 17, one can also see that the mechanism 17 can be moved by the driving unit 36, e.g. by the driving unit 36 camming with the optional teeth arranged on the mechanism 17 or sidewall 13. In order to move the discharge port 30 between the closed position and the open position by means of the mechanism 17, the sidewall 13 thus preferably comprises the opening 31 to thereby also move the opening 31, e.g. with respect to a covering element 32 (see above).

The mechanism 17 thus facilitates the discharging of coffee beans from the chamber 10 via the discharge port 30. The mechanism 17 may also facilitate the insertion of unroasted coffee beans into the chamber 10. As such, the mechanism 17 may be adapted be (rotatably) movable at least into a first position and a second position, wherein in the first position (only) the discharge port 30 is in the open position, and wherein in the second position (only) an (coffee bean) insertion port 3 (see above) is in the open position. Thus, in the first position, the insertion port 3 is preferably in the closed position, and in the second position, the discharge port 30 is preferably in the closed position. In the second position, unroasted coffee beans can then enter the chamber 10 for subsequent roasting. The unroasted coffee beans are preferably (gravity) fed from the hopper 2 via the insertion port 3 into the chamber 10. The insertion port 3 may be or comprise an opening (e.g. a hole or slot) formed or pierced in the sidewall 13. As such, in the open position of the insertion port 3, the opening is not covered, i.e. not obstructed, so that unroasted coffee beans can be inserted into the chamber 10 via the insertion port 3, wherein in the closed position, the opening is covered, i.e. obstructed, so that no unroasted coffee beans can be inserted into the chamber 10 via the insertion port 3.

The mechanism 17 may be adapted to (e.g. rotatably) move into a position (e.g. a position in addition to the first and second position, i.e. a third position), in which chaffs of the coffee beans can flow towards the chaffs collector 50 in order to be collected by the chaffs collector 50. For example, the mechanism 17 comprises one or more (e.g. only two) chaffs ports 51 (e.g. arranged at least in part in the sidewall 13), which in said (third) position allow the chaffs to move or flow (by the current of air generated by the device) via the chaffs ports 51 towards the chaffs collector 50 in order to be collected by the chaffs collector 50. In this position, the (respective) chaffs port 51 is thus in an open position. In any position other than this (third) position, e.g. in the first and second position, the chaffs port 51 is preferably in a closed position. In this closed position, the air flowing through the chaffs port 51 towards the chaffs collector 50 is thus (significantly) reduced or obstructed so that the current of air is advantageously redirected, e.g. for discharging the coffee beans via the discharge port 30 from the chamber 10. In the closed position of the chaffs port 51, preferably no chaffs can flow from the chamber 10 through the chaffs port 51 towards the chaffs collector 50. In the closed position of the chaffs port 51, chaffs, which are collected by the chaffs collector 50, are prevented from moving back into the chamber 10 via the chaffs port 51. The chaffs port 51 may be or comprise an opening (e.g. a slot or hole) formed or pierced in the sidewall 13. As such, in the open position of the chaffs port 51, the opening is not covered, i.e. not obstructed, so that the flow of air and chaffs can flow through the opening and towards the chaffs collector 50 for chaffs collection, wherein in the closed position, the opening is covered, i.e. obstructed, so that the flow of air and chaffs cannot flow through the opening and towards the chaffs collector 50 for chaffs collection.

The sidewall 13 may comprise a cross-section, which comprises both the insert port 3 and the chaffs port 51. In other words, the insert port 3 and the chaffs port 51 may be arranged on substantially the same height with respect to the height of the chamber 10, e.g. at the top of the chamber 10. The discharge port 30 is preferably not arranged in the cross-section of the sidewall 13, which comprises the insert port 3 and/or the chaffs port 51. In other words, the discharge port 30 on the one side and the insert port 3 and/or chaffs port 51 on the other side may be arranged on different heights with respect to the height of the chamber 10, e.g. the discharge port 30 may be arranged on a lower height than the insert port 3 and/or chaffs port 51. The teeth of the mechanism 17, which cam with the driving unit 36, are preferably arranged between the discharge port 30 and the chaffs port 51.

The mechanism 17 is thus preferably a redirecting mechanism, which can be moved into different positions, which correspond to different states of the apparatus 1 in action, e.g. a coffee insertion state (for inserting unroasted coffee beans into the chamber 10), a coffee roasting state (for collecting the chaffs of the coffee beans, which are roasted), and a coffee discharging or ejection state (for discharging the so roasted coffee beans). The mechanism 17 effects that the current of air generated by the device is advantageously redirected, in particular for the specific function of the respective state (roasting, discharging, etc.). The mechanism 17 therefore acts as a selector for the current of air. The mechanism 17 is not limited to a specific form. For example, the mechanism 17 may have the form of a ring, tank, and/or sleeve; the mechanism 17 may thus be a redirection ring.

## Claims

1. An apparatus (1) for roasting coffee beans, the apparatus (1) comprising:
a chamber (10) in which coffee beans can be received for roasting,
a device for generating a current of air in order to agitate and to roast the coffee beans received by the chamber (10),
a heater for heating air so that the so heated air is blown by the device into the chamber (10) in order to generate the heated current of air, and
a control unit for switching the apparatus (1) between a roasting mode and a discharging mode, wherein the control unit is functionally connected to the device for generating a current of air and/or to the heater,
wherein the chamber (10) is delimited by a bottom (11), a top (12), and a sidewall (13) extending from the bottom (11) to the top (12), wherein the sidewall (13) comprises a discharge port (30), which is selectively moveable between a closed position and an open position,
wherein in the roasting mode the discharge port (30) is in the closed position and the device is adapted to generate a heated current of air to roast the coffee beans received by the chamber (10), and wherein in the discharging mode the discharge port (30) is in the open position and the apparatus (1) is arranged to use the current of air generated by the device to drive the coffee beans through the discharge port (30) to be discharged from the chamber (10),
wherein the discharge port (30) is arranged to be closer to the bottom (11) than to the top (12),
wherein the bottom (11) comprises an air inlet, and wherein the device is arranged to blow air through said inlet in order generate the current of air inside of the chamber (10), and
wherein the discharge port (30) is arranged at a distance from the bottom or at the bottom above the air inlet.

2. The apparatus (1) according to claim 1, wherein the discharge port (30) is manually moveable between the closed position and the open position, and/or wherein the apparatus (1) comprises a driving unit (36) arranged to move the discharge port (30) between the closed position and the open position.

3. The apparatus (1) according to any one of the preceding claims, wherein the discharge port (30) is slidably or pivotably moveable in order to move the discharge port (30) between the closed position and the open position, and/or wherein the sidewall (13) is moveable, e.g. pivotably moveable, in order to move the discharge port (30) between the closed position and the open position.

4. The apparatus (1) according to any one of the preceding claims, wherein the device is adapted to generate a current of air to cool the coffee beans received by the chamber (10).

5. The apparatus (1) according to any one of the preceding claims, wherein at least a cross-section of the sidewall (13), which comprises the discharge port (30), has at least in part a circular or elliptical shape.

6. The apparatus (1) according to any one of the preceding claims, wherein the top (12) comprises an outlet (14) that is selectively moveable between a closed position and an open position, wherein in the open position the outlet (14) allows air and/or coffee chaff to be discharged from the chamber (10).

7. The apparatus (1) according to any one of the preceding claims, further comprising a chaffs collector (50), wherein the chaffs collector (50) is arranged to collect chaffs of the coffee beans, e.g. via the outlet (14), wherein the apparatus (1) is preferably adapted to use the current of air to drive the chaffs into the chaffs collector (50).

8. System (100) comprising an apparatus (1) according to any one of the preceding claims and a further apparatus, wherein the further apparatus is functionally connected to the apparatus (1) to process the coffee beans, which are discharged from the apparatus (1) through the discharge port (30).

9. System (100) according to claim 8, wherein the further apparatus comprises a grinder for grinding the coffee beans, and/or wherein the further apparatus comprises a beverage preparation machine (101) for preparing a beverage from the coffee beans.

## Patentansprüche

1. Einrichtung (1) zum Rösten von Kaffeebohnen, die Einrichtung (1) umfassend:
eine Kammer (10), in der Kaffeebohnen zum Rösten aufgenommen werden können,
eine Vorrichtung zum Erzeugen eines Luftstroms, um die Kaffeebohnen zu bewegen und zu rösten, die durch die Kammer (10) aufgenommen wurden,
eine Heizung zum Erhitzen von Luft, so dass die so erhitzte Luft durch die Vorrichtung in die Kammer (10) geblasen wird, um den erhitzten Luftstrom zu erzeugen, und
eine Steuereinheit zum Umschalten der Einrichtung (1) zwischen einem Röstmodus und einem Ausgabemodus, wobei die Steuereinheit funktional mit der Vorrichtung zum Erzeugen eines Luftstroms und/oder mit der Heizung verbunden ist,
wobei die Kammer (10) durch einen Boden (11), eine Oberseite (12) und eine Seitenwand (13) begrenzt ist, die sich von dem Boden (11) zu der Oberseite (12) erstreckt, wobei die Seitenwand (13) eine Ausgabeöffnung (30) umfasst, die selektiv zwischen einer geschlossenen Position und einer offenen Position bewegbar ist,
wobei sich in dem Röstmodus die Ausgabeöffnung (30) in der geschlossenen Position befindet und die Vorrichtung dazu geeignet ist, einen erhitzten Luftstrom zu erzeugen, um die durch die Kammer (10) aufgenommenen Kaffeebohnen zu rösten, und wobei sich in dem Ausgabemodus die Ausgabeöffnung (30) in der offenen Position befindet und die Einrichtung (1) dazu angeordnet ist, den durch die Vorrichtung erzeugten Luftstrom zu nutzen, um die Kaffeebohnen durch die Ausgabeöffnung (30) zu treiben, damit sie aus der Kammer (10) ausgegeben werden,
wobei die Ausgabeöffnung (30) näher an dem Boden (11) als an der Oberseite (12) angeordnet ist,
wobei der Boden (11) einen Lufteinlass umfasst, und wobei die Vorrichtung so angeordnet ist, dass sie Luft durch den Einlass hindurch bläst, um den Luftstrom innerhalb der Kammer (10) zu erzeugen, und
wobei die Ausgabeöffnung (30) mit einem Abstand zu dem Boden oder an dem Boden oberhalb des Lufteinlasses angeordnet ist.

2. Einrichtung (1) nach Anspruch 1, wobei die Ausgabeöffnung (30) manuell zwischen der geschlossenen Position und der offenen Position bewegbar ist, und/oder wobei die Einrichtung (1) eine Antriebseinheit (36) umfasst, die dazu angeordnet ist, die Ausgabeöffnung (30) zwischen der geschlossenen Position und der offenen Position zu bewegen.

3. Einrichtung (1) nach einem der vorstehenden Ansprüche, wobei die Ausgabeöffnung (30) verschiebbar oder schwenkbar bewegbar ist, um die Ausgabeöffnung (30) zwischen der geschlossenen Position und der offenen Position zu bewegen, und/oder wobei die Seitenwand (13) bewegbar, z. B. schwenkbar bewegbar ist, um die Ausgabeöffnung (30) zwischen der geschlossenen Position und der offenen Position zu bewegen.

4. Einrichtung (1) nach einem der vorstehenden Ansprüche, wobei die Vorrichtung ferner dazu geeignet ist, einen Luftstrom zu erzeugen, um die durch die Kammer (10) aufgenommenen Kaffeebohnen zu kühlen.

5. Einrichtung (1) nach einem der vorstehenden Ansprüche, wobei mindestens ein Querschnitt der Seitenwand (13), der die Ausgabeöffnung (30) umfasst, mindestens teilweise eine kreisförmige oder elliptische Form aufweist.

6. Einrichtung (1) nach einem der vorstehenden Ansprüche, wobei die Oberseite (12) einen Auslass (14) umfasst, der selektiv zwischen einer geschlossenen Position und einer offenen Position bewegbar ist, wobei der Auslass (14) in der offenen Position ein Ausgeben von Luft und/oder Kaffeespreu aus der Kammer (10) ermöglicht.

7. Einrichtung (1) nach einem der vorstehenden Ansprüche, ferner umfassend einen Spreuauffangbehälter (50), wobei der Spreuauffangbehälter (50) dazu angeordnet ist, Spreu der Kaffeebohnen aufzufangen, z. B. über den Auslass (14), wobei die Einrichtung (1) vorzugsweise dazu geeignet ist, den Luftstrom zu nutzen, um die Spreu in den Spreuauffangbehälter (50) zu treiben.

8. System (100), umfassend eine Einrichtung (1) nach einem der vorstehenden Ansprüche und eine weitere Einrichtung, wobei die weitere Einrichtung funktional mit der Einrichtung (1) verbunden ist, um die Kaffeebohnen zu verarbeiten, die durch die Ausgabeöffnung (30) hindurch aus der Einrichtung (1) ausgegeben werden.

9. System (100) nach Anspruch 8, wobei die weitere Einrichtung eine Mühle zum Mahlen der Kaffeebohnen umfasst, und/oder wobei die weitere Einrichtung eine Getränkezubereitungsmaschine (101) zum Zubereiten eines Getränks aus den Kaffeebohnen umfasst.

## Revendications

1. Appareil (1) permettant de torréfier des grains de café, l'appareil (1) comprenant :
une chambre (10) dans laquelle des grains de café peuvent être reçus pour être torréfiés,
un dispositif permettant de générer un courant d'air pour agiter et torréfier les grains de café reçus par la chambre (10),
un dispositif de chauffage permettant de chauffer l'air, de sorte que l'air ainsi chauffé est soufflé par le dispositif dans la chambre (10) afin de générer le courant d'air chauffé, et
une unité de commande permettant de faire passer l'appareil (1) d'un mode de torréfaction à un mode d'évacuation, dans lequel l'unité de commande est reliée de manière fonctionnelle au dispositif permettant de générer un courant d'air et/ou au dispositif de chauffage,
dans lequel la chambre (10) est délimitée par un fond (11), un sommet (12) et une paroi latérale (13) s'étendant du fond (11) au sommet (12), dans lequel la paroi latérale (13) comprend un orifice d'évacuation (30), qui peut être déplacé sélectivement entre une position fermée et une position ouverte,
dans lequel, en mode torréfaction, l'orifice d'évacuation (30) est en position fermée et le dispositif est adapté à générer un courant d'air chauffé afin de torréfier les grains de café reçus par la chambre (10), et dans lequel, en mode d'évacuation, l'orifice d'évacuation (30) est en position ouverte et l'appareil (1) est conçu pour utiliser le courant d'air généré par le dispositif afin d'entraîner les grains de café à travers l'orifice d'évacuation (30) pour être évacués de la chambre (10),
dans lequel l'orifice d'évacuation (30) est conçu pour être plus proche du fond (11) que du sommet (12),
dans lequel le fond (11) comprend une entrée d'air, et dans lequel le dispositif est conçu pour souffler de l'air à travers ladite entrée afin de générer un courant d'air à l'intérieur de la chambre (10), et
dans lequel l'orifice d'évacuation (30) est disposé à une certaine distance du fond ou au niveau du fond au-dessus de l'entrée d'air.

2. Appareil (1) selon la revendication 1, dans lequel l'orifice d'évacuation (30) peut être déplacé manuellement entre la position fermée et la position ouverte, et/ou dans lequel l'appareil (1) comprend une unité d'entraînement (36) conçue pour déplacer l'orifice d'évacuation (30) entre la position fermée et la position ouverte.

3. Appareil (1) selon l'une quelconque des revendications précédentes, dans lequel l'orifice d'évacuation (30) peut coulisser ou pivoter afin de déplacer l'orifice d'évacuation (30) entre la position fermée et la position ouverte, et/ou dans lequel la paroi latérale (13) peut être déplacée, par exemple de manière pivotante, afin de déplacer l'orifice d'évacuation (30) entre la position fermée et la position ouverte.

4. Appareil (1) selon l'une quelconque des revendications précédentes, dans lequel l'appareil est adapté à générer un courant d'air pour refroidir les grains de café reçus par la chambre (10).

5. Appareil (1) selon l'une quelconque des revendications précédentes, dans lequel au moins une section transversale de la paroi latérale (13), qui comprend l'orifice d'évacuation (30), présente, au moins en partie, une forme circulaire ou elliptique.

6. Appareil (1) selon l'une quelconque des revendications précédentes, dans lequel le sommet (12) comprend une sortie (14) qui peut être déplacée sélectivement entre une position fermée et une position ouverte, dans lequel, en position ouverte, la sortie (14) permet à l'air et/ou aux paillettes de café d'être évacués de la chambre (10).

7. Appareil (1) selon l'une quelconque des revendications précédentes, comprenant en outre un collecteur de paillettes (50), dans lequel le collecteur de paillettes (50) est conçu pour collecter des paillettes des grains de café, par exemple par l'intermédiaire de la sortie (14), dans lequel l'appareil (1) est de préférence adapté à utiliser le courant d'air afin d'entraîner les paillettes dans le collecteur de paillettes (50).

8. Système (100) comprenant un appareil (1) selon l'une quelconque des revendications précédentes et un appareil supplémentaire, dans lequel l'appareil supplémentaire est relié de manière fonctionnelle à l'appareil (1) pour traiter les grains de café, qui sont évacués de l'appareil (1) par l'orifice d'évacuation (30).

9. Système (100) selon la revendication 8, dans lequel l'appareil supplémentaire comprend un moulin permettant de moudre les grains de café, et/ou dans lequel l'appareil supplémentaire comprend une machine de préparation de boissons (101) permettant de préparer une boisson à partir des grains de café.
